# EUROPÄISCHE PATENTSCHRIFT

(11) **EP 1 440 595 B1**
(45) Veröffentlichungstag und Bekanntmachung des Hinweises auf die Patenterteilung: **05.03.2014**
(21) Anmeldenummer: 01975953.9
(22) Anmeldetag: 29.10.2001
(51) Int. Cl.: H04W 4/12, H04W 12/06, H04W 8/26, H04W 60/00

(54) **VERFAHREN UND SYSTEM, UM ANONYM MELDUNGEN DURCH EIN TELEKOMMUNIKATIONSNETZ ZU ÜBERTRAGEN**
METHOD AND SYSTEM FOR TRANSMITTING ANONYMOUS MESSAGES BY MEANS OF A TELECOMMUNICATION NETWORK
PROCEDE ET SYSTEME DE TRANSMISSION ANONYME DE MESSAGES PAR UN RESEAU DE TELECOMMUNICATION

(43) Veröffentlichungstag der Anmeldung: 28.07.2004
(73) Patentinhaber: Swisscom AG, 3050 Bern (CH)
(72) Erfinder: LAGADEC, Roger, CH-Regensdorf 8105 (CH); LAUPER, Eric, CH-3014 Bern (CH)
(74) Vertreter: P&TS SA (AG, Ltd.)
(86) Internationale Anmeldenummer: PCT/CH2001/000641
(87) Internationale Veröffentlichungsnummer: WO 2003/039182

(56) Entgegenhaltungen:
- EP-A2- 0 982 913
- WO-A-01/60083
- DE-A- 19 638 072
- US-A- 5 058 152
- US-A- 5 854 982
- SAMFAT D ET AL: "UNTRACEABILITY IN MOBILE NETWORKS" MOBICOM. PROCEEDINGS OF THE ANNUAL INTERNATIONAL CONFERENCE ON MOBILE COMPUTING AND NETWORKING, XX, XX, 13. November 1995 (1995-11-13), Seiten 26-36, XP000197826

## Beschreibung

Die vorliegende Erfindung betrifft ein Verfahren und ein System, um Meldungen, insbesondere Abfragen, durch ein Telekommunikationsnetz zu übertragen.

Meldungen zwischen einem Sender und einem Empfänger werden in einem Telekommunikationsnetz oft über eine oder mehrere Vermittlungsstellen geleitet. Dies ist insbesondere der Fall bei Meldungen, die eine Abfrage eines Mobilfunktelefon-Benutzers an einen Dienstanbieter enthalten. Viele Abfragen enthalten vertrauliche Informationen, zum Beispiel die Identität und den Standort des Benutzers. Diese Informationen werden vom Empfänger benötigt, um die Abfrage zu beantworten. In diesem Fall können die Betreiber der verschiedenen Vermittlungsstellen zwischen dem Sender und dem Empfänger auf vertrauliche Informationen zugreifen, die nicht für sie bestimmt sind. Beispielsweise können sie detaillierte Bewegungsprofile der Benutzer herstellen, was einerseits für die Akzeptanz der Technologie nicht wünschenswert und ausserdem datenschutzrechtlich bedenklich ist.

Es sind schon Verfahren bekannt, um Meldungen vom Sender bis zum Empfänger zu verschlüsseln und sie damit gegenüber Betreibern von Vermittlungsstellen vertraulich zu halten. Solche Verfahren basieren meistens auf Kryptotechnologien, die eine Rechenleistung verlangen, die im Senderterminal nicht immer verfügbar ist. Ausserdem wird das Weiterleiten der Meldungen in den Vermittlungsstellen oft erheblich erschwert, wenn die gesamte Meldung verschlüsselt ist.

In manchen Fällen ist ausserdem eine Verschlüsselung der Meldungen weder nötig noch erwünscht. Zum Beispiel ist es schon bekannt, dass Betreiber von Vermittlungsstellen Statistikanalysen von Abfragen der verschiedenen Sender herstellen. Es können zum Beispiel die Anzahl von Benutzern aus einem bestimmten Land oder die Reaktion auf eine bestimmte Werbekampagne ermittelt werden. Solange keine persönliche Sender- oder Empfängerprofile aufbewahrt oder bekannt gemacht werden, werden weder die Sender noch die Empfänger etwas dagegen einzuwenden haben.

Es sind ausserdem schon Verfahren bekannt, um Meldungen zu anonymisieren. In diesem Fall werden alle benutzeridentifizierenden Merkmale in einer ersten Vermittlungsstelle durch eine temporäre Alias-Identifizierung ersetzt; die Meldung ist gegenüber weiteren Vermittlungsstellen und gegenüber dem Empfänger anonym, bleibt aber lesbar.

Solche Anonymisierungsvorgänge sind jedoch nicht geeignet, wenn die vom Empfänger erbrachte Dienstleistung von der Identität des Senders abhängig ist. Viele Dienstanbieter bieten zum Beispiel spezielle Rabatte oder Angebote für treue Kunden an, die bei einem anonymen Vorgang nicht angeboten werden könnten. Viele Dienstanbieter pflegen ausserdem Benutzerprofildatenbanken, in welchen zum Beispiel die bevorzugte Zahlungsart oder Korrespondenzsprache der Kunden abgelegt ist.

DE-A1-196 38 072 offenbart ein Verfahren sowie eine Einrichtung zur Anonymisierung von Telekommunikationsvorgängen und -beziehungen bei Telematikanwendungen, wobei eine logisch zwischen Telekommunikationsnetz und Telematik-Service-Zentrale befindliche Einrichtung gegenüber dem Betreiber/Anbieter von Telematik-Dienstleistungen alle den Entteilnehmer identifizierenden Merkmale aus dem Kommunikationsvorgang entfernt. Sie werden durch eine eindeutige, ausserhalb der Einrichtung unbekannte und hinreichend häufig wechselnde temporäre Identifikation ersetzt und für eine begrenzte Zeit wird die Abbildung der permanenten Identifikation auf die temporäre Identifikation gewährleistet.

Ein Ziel der Erfindung ist es, ein Verfahren und ein System anzubieten, in welchen Meldungen zwischen einem Sender und einem Empfänger in einem Mobilfunknetz nur gegenüber gewissen Vermittlungsstellen anonym gehalten werden, nicht aber gegenüber dem Empfänger der Meldung.

Gemäss der vorliegenden Erfindung wird dieses Ziel insbesondere durch die Elemente der unabhängigen Ansprüche erreicht. Weitere vorteilhafte Ausführungsformen gehen ausserdem aus den abhängigen Ansprüchen und der Beschreibung hervor.

Insbesondere wird dieses Ziel dadurch erreicht, dass identifizierende Merkmale des Senders der Meldung durch eine Alias-Identifizierung in einer Vermittlungsstelle zwischen dem Sender und dem Empfänger ersetzt werden, dass die Abbildung zwischen den identifizierenden Merkmalen und der Alias-Identifizierung für eine Zeitspanne, die verglichen mit dem durchschnittlichen Abstand zwischen nacheinander folgenden Meldungen lang ist (zum Beispiel mehrere Wochen), gewährleistet wird, und dass eine Abbildung zwischen der benannten Alias-Identifizierung und für den benannten Empfänger hinreichend qualifizierenden Merkmalen vom benannten Empfänger bekannt ist.

Für den benannten Empfänger hinreichend qualifizierende Merkmale sind zum Beispiel Merkmale, mit welchen der Empfänger den Sender identifizieren kann, beispielsweise mit seinem Namen und seiner Adresse. Es können aber auch Merkmale sein, die keine vollständige Identifizierung erlauben, die aber für den Sinn der Transaktion genügen-beispielsweise Merkmale, aus denen der Empfänger eine Kreditkartennummer herleiten kann. Hinreichend qualifizierende Merkmale können beispielsweise aus den vom Empfänger verwendeten Kundennummern bestehen.

Dies hat den Vorteil, dass die Meldung nur gegenüber gewissen Vermittlungsstellen anonym weitergeleitet wird, aber dass die Abbildung zwischen der verwendeten Alias-Identifizierung und dem Sender beim Empfänger wiederhergestellt wird.

Ein anderer Vorteil ist, dass nur der Empfänger für die Qualität der Geschäftsverbindung mit dem Sender verantwortlich ist. Die Betreiber der Vermittlungsstellen brauchen keine Geschäftsbedingungen betreffend der Transaktion zu vereinbaren; sie agieren nur als Meldungsvermittler, nicht als finanzielle Partner.

Die Erfindung kann nicht nur verwendet werden, wenn die Alias-Identifizierung anonym ist, sondern auch wenn sie für den Sender unverständlich oder unpraktisch ist.

Erfindungsgemäss wird diese Abbildung während einem Registrierungsvorgang festgelegt, indem der Sender eine Registrierungsmeldung mit einem vom Empfänger mit diesem Sender assoziierten Geheimnis an den Empfänger sendet.

Dies hat den Vorteil, dass die Abbildung zwischen der Alias-Identifizierung und dem entsprechenden Sender einmalig festgelegt werden muss und für alle weitere Meldungen verwendet wird.

Nachdem die Abbildung zwischen der von der ersten Vermittlungsstelle verwendeten Alias-Identifizierung und der Identität eines bestimmten Senders nach dem Registrierungsvorgang bei dem Empfänger festgelegt wurde, kann der Empfänger jede weitere Meldung dieses Senders erkennen.

Meldungen werden an einen bestimmten Empfänger anhand einer bekannten Abbildung in einer Vermittlungsstelle zwischen entweder jeder möglichen Meldung oder Meldungen mit einer speziellen Syntax, und bestimmten Empfängern, weitergeleitet.

Nachfolgend wird eine Ausführung der vorliegenden Erfindung anhand eines Beispieles beschrieben. Das Beispiel der Ausführung wird durch folgende beigelegten Figuren illustriert:
Figur 1 zeigt ein Datenflussdiagramm, in welchem schematisch die möglichen Verfahrenschritte während der Übertragung einer Meldung dargestellt werden.
Figur 2 zeigt ein anderes Datenflussdiagramm, in welchem schematisch die möglichen Verfahrenschritte beim Registrierungsvorgang dargestellt werden.

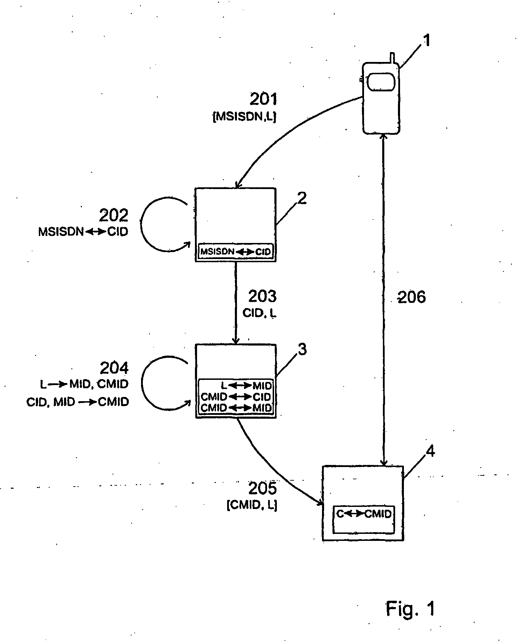

In der Figur 1 bezieht sich die Bezugsziffer 1 auf einen Sender, beispielsweise ein Mobilfunktelefon oder ein PDA (Personal Digital Assistant) mit einem Anschluss an einem Telekommunikationsnetz. Das Telekommunikationsnetz kann vorzugsweise ein Mobilfunknetz sein, beispielsweise ein GSM (Global System for Mobile Communications), GPRS (General Packet Radio System), HSCSD (High Speed Circuit Switched Data) oder UMTS-Telefon (Universal Mobile Telecommunication System). Das Mobilfunktelefon verfügt somit vorzugsweise über eine Identifizierungskarte (nicht dargestellt), beispielsweise eine SIM-Karte (Subscriber Identity Module), in welcher benutzeridentifizierende Daten abgelegt sind.

Die Bezugsziffer 4 bezieht sich auf den Empfänger einer Meldung des Senders 1. Der Empfänger besteht vorzugsweise aus einem Rechnersystem, beispielsweise ein Web- oder Wap-Host und wird vorzugsweise von einem Dienstanbieter verwaltet (beispielsweise ein Lieferant von Produkten oder Informationen). Es können aber auch andere Dienstanbieter vorgesehen werden, zum Beispiel ein Postamt 5, ein Finanzinstitut 6, eine Versicherung, eine Regierungsstelle, usw. Als Beispiel eines Finanzinstituts 6 kann zum Beispiel eine Bank oder ein Kreditkartenherausgeber in Frage kommen.

Der Sender 1 wendet sich an den Empfänger 4, um eine Dienstleistung zu bestellen, indem eine Abfrage L auf der Tastatur des Mobilfunktelefons eingetippt oder automatisch eingegeben und in eine Meldung 201 verpackt und an den Empfänger 4 gesendet wird. Die Meldung 201 wird vorzugsweise als USSD-Meldung (Unstructured Supplementary Service Data) übertragen und kann somit direkt auf der Tastatur eines Mobilfunktelefons eingegeben werden, ohne dass ein Menu angewählt werden muss. USSD-Meldungen haben den Vorteil, dass sie kostenlos und ohne Verzögerung übertragen werden. Die USSD-Meldungen enthalten einen Dienstcode, zum Beispiel 141, und eine Dienstleistungsnummer, zum Beispiel 123456. Ein Teil der Dienstleistungsnummer, zum Beispiel ein Vorsatz, in diesem Beispiel der Vorsatz 123, kommt vorzugsweise aus einer vordefinierten Serie von Nummern, die für Transaktionen mit externen Empfängern 4 reserviert sind. Dienstleistungsnummern die nicht in dieser vordefinierten Serie enthalten sind, sind für die weitere Vermittlungsstellen 3 oder für andere Dienste bestimmt. Es ist aber auch möglich, alle Meldungen die eine besondere Syntax haben, an einen bestimmten Empfänger weiterzuleiten, oder Abbildungsstabellen zwischen jeder möglichen Meldung und den möglichen Empfängern 4 festzulegen.

Ein Beispiel einer USSD-Abfrage L für eine besondere Dienstleistung wäre zum Beispiel
*141*123456#

Die Abfrage L, die für den Zugriff auf eine bestimmte Dienstleistung eingegeben werden muss, kann vom Empfänger auf verschiedene Arten bekannt gemacht werden, zum Beispiel indem sie auf Werbeträgern irgendwelcher Art angegeben wird, z.B. auf Prospekten, in Katalogen, Inseraten in der Presse, TV-Werbespots, Internet-Seiten, Fax, Aussenwerbung usw. oder, im Falle einer Zahlungstransaktion auf Rechnungen. Es ist auch möglich, die Abfrage als Datei in einem digitalen Datenstrom, (zum Beispiel als Bild- oder Ton-begleitende Daten in einem Multimediaprogramm) anzugeben. Die Abfrage L kann manuell oder automatisch (zum Beispiel mit einem Scanner oder ein Barcode-Leser) durch das Mobilfunktelefon erfasst werden.

Ausser über USSD-Meldungen können die Meldungen 201 im Rahmen der Erfindung zum Beispiel auch als SMS (Short Message System), als Datenpaket in einem Paket-geschalteten Netz oder als SS7-Signalisierungsmeldung in einem ISDN-Netz gesendet werden.

Die Meldung 201 wird durch eine erste Vermittlungsstelle 2 geleitet, die als Schnittstelle zwischen dem Mobilfunknetz in welchem das Mobilfunktelefon 1 angemeldet ist, und dem Netz (zum Beispiel Internet) mit welchem der Empfangsrechner verbunden ist, dient. Die erste Vermittlungsstelle 2 besteht vorzugsweise aus einem USSD-Händler, der vom Betreiber des Mobilfunknetzes bei welchem das Mobilfunktelefon 1 angemeldet ist (vorzugsweise der Betreiber, der die SIM-Karte im Mobilfunktelefon 1 verteilt hat), verwaltet wird, und der alle empfangenen Meldungen mit einem bestimmten Dienstcode (zum Beispiel 141) aneine vordefinierte weitere Vermittlungsstelle 3 weiterleitet. Falls SMS oder andere Meldungen statt oder zusätzlich zu USSD-Meldungen verwendet werden, kann die erste Vermittlungsstelle 2 auch aus einem SMS-Händler oder einer anderen passenden Schnittsstelle bestehen.

Benutzerspezifische Daten, zum Beispiel eine Post-, Rechnungs- oder elektronische Adresse, können in der ersten Vermittlungsstelle 2 gespeichert werden und vom Benutzer 1 des Mobilfunktelefons über USSD-Meldungen, SMS, WAP oder eine passende WEB-Seite verwaltet werden. Diese Daten könnten verwendet werden, um eine Antwort des Dienstanbieters 4 über einen passenden Rückkanal an den Sender 1 senden zu können.

Die erste Vermittlungsstelle 2 hat optional auch die Möglichkeit, die Meldung 201 mit anderen Daten zu ergänzen, zum Beispiel mit der Zeit oder mit Senderstandortangaben.

Mindestens eine weitere Vermittlungsstelle 3 befindet sich logisch zwischen der ersten Vermittlungsstelle 2 und dem Empfänger 4. Die weitere Vermittlungsstelle 3 besteht vorzugsweise aus einer Plattform (zum Beispiel aus einem elektronischen Marktplatz), durch welche für verschiedene Empfänger 4, 5, 6 bestimmte Meldungen geleitet werden. Bestimmte Dienste können aber auch direkt von der weiteren Vermittlungsstelle 3 angeboten werden. Die weitere Vermittlungsstelle 3 vergleicht den Vorsatz (zum Beispiel 123) der empfangenen Meldung 203 mit einer vordefinierten Liste und leitet die Meldungen mit einem Vorsatz, der sich auf der Liste befindet, auf Basis der Dienstleistungsnummer (zum Beispiel 123456) in der Abfrage L an den betroffenen mit einer Nummer MID identifizierten Empfänger 4 weiter. Vorzugsweise führt sie auch Statistiken über weitergeleitete Meldungen (beispielsweise zu Marketingzwecken). Die Statistikergebnisse werden periodisch an die betreffenden Dienstleistungsanbieter 4 gesendet oder können von diesem vorzugsweise auf einer geschützten Internet-Seite abgefragt werden.

Der Fachmann wird verstehen, dass die erste Vermittlungsstelle 2 und die zweite Vermittlungsstelle 3 auch kombiniert und vom selben Betreiber verwaltet werden können.

Der Empfänger 4 empfängt die Meldung 205 oder holt diese aus der weiteren Vermittlungsstelle 3 ab und bearbeitet die beinhaltete Abfrage. Er kann eine Antwort in der anderen Richtung über den gleichen Kanal über die Vermittlungsstellen 3, 2 an den Sender 1 senden, wobei die benutzerspezifischen Daten in der ersten Vermittlungsstelle 2 verwendet werden können. Die Antwort kann zum Beispiel verwendet werden, um zusätzliche Informationen, eine elektronische Eintrittskarte, eine Bestätigung einer Benutzerwahl oder Wettbewerbsteilnahme, an den abfragenden Sender 1 zu senden. Die Antwort kann von einem vorzugsweise anonymen Senderprofil in der weiteren Vermittlungsstelle 3 abhängig sein; der Sender kann sein persönliches Profil über spezielle Meldungen oder über eine Webseite anpassen. Im Profil können beispielsweise die bevorzugte Sprache, das verwendete Mobilfunktelefon 1, der bevorzugte Antwortkanal, usw., angegeben werden.

Es ist wünschenswert, dass die Meldung 201 des Senders 1 gegenüber der weiteren Vermittlungsstelle 3 anonym bleibt. Dies ist insbesondere dann der Fall, wenn diese Meldung vertrauliche oder datenschutzkritische Informationen, enthält, zum Beispiel den Standort des Senders. Zum einen würden viele potentielle Benutzer 1 kaum akzeptieren, dass eine Vermittlungsstelle 3, die von einer nicht vertrauten Instanz verwaltet wird, über all ihre Bewegungen und Bestellungsmeldungen informiert ist. Zum anderen könnte sich der Betreiber dieser Vermittlungsstelle 3 in einer datenschutzrechtlich bedenklichen Situation befinden, wenn er über solche Informationen einer grossen Anzahl von Mobilteilnehmern 1 verfügen würde.

Um dieses Problem zu lösen, werden vorzugsweise in der ersten Vermittlungsstelle 2 alle senderidentifizierenden Merkmale aus der Meldung 201 entfernt und durch eine Alias-Identifizierung CID ersetzt (Schritt 202). Im Fall einer Meldung 201 aus einem GSM-Mobilfunktelefon wird beispielsweise die MSISDN (Mobile Subscriber Identification Number) in der Vermittlungsstelle 2 durch eine Alias-Identifizierung CID ersetzt. Die Abbildung zwischen einer MSISDN und einer CID ist permanent, oder wird zumindest für mehrere Wochen oder für eine Zeitspanne, die verglichen mit dem Abstand zwischen nacheinander folgenden Meldungen sehr lang ist, gewährleistet. Sie kann in einer Tabelle gespeichert werden, oder vorzugsweise dynamisch ermittelt werden, indem die Identifizierung MSISDN mit einem geheimen elektronischen Schlüssel verschlüsselt wird. Nur der Betreiber der ersten Vermittlungsstelle 2 kennt aber diese Abbildung bzw. den Schlüssel. Im Normalfall wird diese Vermittlungsstelle durch den Betreiber des Mobilfunknetzes verwaltet, bei welchem der Sender 1 angemeldet ist. Es besteht somit eine vertragliche Beziehung zwischen dem Sender 1 und diesem Betreiber, so dass es die meisten Benutzer nicht für nötig halten, dass ihre Meldungen gegenüber diesem Verwalter anonym bleiben. Dies ist insbesondere deshalb der Fall, weil die Meldung 201 nicht für diesen Betreiber bestimmt ist und für ihn meistens unverständlich bleibt.

Wenn die Vermittlungsstelle 2 durch den Betreiber des Mobilfunknetzes verwaltet wird, ist auch eine Telefonnummer-Umnummerierung, zum Beispiel bei einem Telefonnummer-Planwechsel oder nach einem Abonnementwechsel eines Teilnehmers, möglich. In diesem Fall kann die Abbildung zwischen dem alten MSISDN und der Alias-Identifizierung CID durch eine Abbildung zwischen dem neuen MSISDN und derselben Alias-Identifizierung ersetzt werden.

Die weitere Vermittlungsstelle 3 empfängt somit nur eine anonyme Meldung 203, die sie nicht auf einen bestimmten Sender 1 zurückführen kann. Sie kann aber Statistikanalysen auf Basis der Meldungen 203 von verschiedenen Sendern 1 durchführen.

Der Empfänger 4 kann eine bestimmte Meldung 205 eines anonymen Senders beantworten, indem er eine entsprechende Meldung (nicht dargestellt) an die weitere Vermittlungsstelle 3 sendet, in welcher die Alias-Identifizierung enthalten ist. Diese Antwort wird von der weiteren Vermittlungsstelle 3 an die erste Vermittlungsstelle 2 weitergeleitet, die die Alias-Identifizierung wieder durch die identifizierenden Merkmale (zum Beispiel die MSISDN) des Senders 1 ersetzt und die Antwort somit an den Sender 1 weiterleiten kann.

Oft ist es wünschenswert, dass die Meldung 201 des Senders 1 nur gegenüber der weiteren Vermittlungsstelle 2 anonym bleibt, nicht aber gegenüber dem Empfänger 4. Dies ist insbesondere dann der Fall, wenn die erbrachte Dienstleistung oder deren Preisbedingungen von der Identität des Senders abhängig ist, oder wenn die Antwort nicht über den selben Rückkanal über die Vermittlungsstellen 3, 2 gesendet werden kann (beispielsweise wenn ein Produkt per Post geliefert werden muss). Oft haben auch Dienstanbieter 4 ihre eigene Kundendatenbank, in welcher Kundenprofile abgelegt werden. Das Profil kann zum Beispiel bestimmen, welche Sender 1 von welchen Bedingungen profitieren dürfen und was die Präferenzen der Kunden sind. Es wird oft von den Dienstanbietern 4 wie auch von den Sendern 1 gewünscht, dass Meldungen, die über den beschriebenen anonymen Kanal über die Vermittlungsstellen 2,3 übermittelt werden, wie andere Meldungen behandelt werden. Oft ist auch erwünscht, dass nur der Empfänger 4 für die Qualität der geschäftlichen Verbindung zum Sender 1 haftet.

Erfindungsgemäss werden diese Ziele erreicht, indem die erste Alias-Identifizierung CID, die von der ersten Vermittlungsstelle 2 verwendet wird, in der weiteren Vermittlungsstelle 3 durch eine andere Identifizierung CMID, oder durch identifizierende Merkmale, die für den Empfänger 4 ausreichen um den Sender 1 zu identifizieren, ersetzt wird (Schritt 204). Die andere Identifizierung CMID, die einer ersten Alias-Identifizierung CID entspricht, ist vorzugsweise vom mit einer MID identifizierten Empfänger 4 abhängig. Wie wir später sehen werden, kann nur der Empfänger 4 den Sender 1 mit dem entsprechenden CMID assoziieren; für die Vermittlungsstelle 3 ist die neue Alias-Identifizierung CMID genauso anonym wie die erste Alias-Identifizierung CID.

Der Empfänger 4 empfängt somit eine Meldung 205, in welcher mindestens die Abfrage L und eine ihm verständliche Alias-Identifizierung CMID enthalten sind. Aus dieser Alias-Identifizierung CMID kann er eine für ihn aussagekräftige Angabe C, zum Beispiel die Kundenummer, ableiten. Somit kann er die gewünschte Dienstleistung erbringen, indem er eine Meldung entweder durch die Vermittlungsstellen 2,3 oder direkt an den Sender 1 sendet (Schritt 206). Ausser Meldungen kann er auch andere Dienstleistungen oder sogar Produkte über verschiedene Rückkanäle an den Sender 1 übertragen.

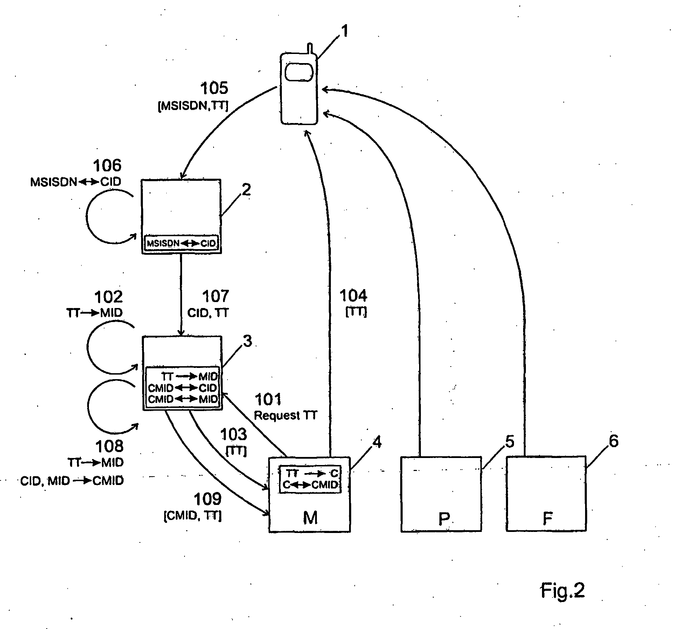

Wir werden jetzt anhand der Figur 2 beschreiben, wie sich der Sender 1 bei der weiteren Vermittlungsstelle 3 registriert, um die Abbildung zwischen der ersten Alias-Identifizierung CID und der vom Empfänger verständlichen anderen Alias-Identifizierung CMID festzulegen, ohne der weiteren Vermittlungsstelle 3 seine Identität mitzuteilen.

Um einen neuen Kunden 1 registrieren zu lassen, verlangt der Empfänger 4 zuerst ein Geheimnis TT von der weiteren Vermittlungsstelle 3 (Pfeil 101). Das Geheimnis TT kann beispielsweise eine Nummer oder eine alphanumerische Kette sein, die beispielsweise von einem Zufallgenerator in der weiteren Vermittlungsstelle 3 erzeugt, temporär gespeichert und an den Empfänger 4 gesendet wird (Pfeil 103). Dieses Geheimnis TT wird vom Empfänger 4 während einer begrenzten Dauer gespeichert und dem Sender 1 über einen direkten Kanal, zum Beispiel über SMS, per Post, mündlich, am Schalter, usw. mitgeteilt. Diese Übertragung muss als vertraulich betrachtet werden können. Die weitere Vermittlungsstelle speichert die Abbildung zwischen dem Geheimnis TT und dem mit einer Dienstanbieternummer MID identifizierten Empfänger 4 (Pfeil 102).

Im Rahmen der Erfindung könnte ein eindeutiges Geheimnis auch vom Empfänger 4 oder vom Sender 1 erzeugt werden und gegenüber der weiteren Vermittlungsstelle 3 anonym gehalten werden.

Um sich zu registrieren, sendet der Sender 1 eine Registrierungsmeldung 105 an die erste Vermittlungsstelle 2. Die Registrierungsmeldung 105 wird vorzugsweise wie andere Meldungen gesendet, zum Beispiel als USSD-Meldung, SMS oder SS7-Signalisierungsdata. Das mit dem Empfänger vereinbarte Geheimnis TT ist in der Meldung 105 enthalten.

Die erste Vermittlungsstelle 2 behandelt die Registrierungsmeldung 105 wie alle andere Meldungen und ersetzt die senderidentifizierenden Daten MSISDN durch eine erste Alias-Identifizierung CID (Schritt 106). Falls noch keine Alias-Identifizierung dieser MSISDN entspricht, wird eine neue Abbildung erzeugt und permanent gespeichert. In allen weiteren Meldungen dieses Senders wird die MSISDN durch die gleiche Alias-Identifizierung ersetzt.

Die angepasste Registrierungsmeldung 107 wird dann an die weitere Vermittlungsstelle 3 weitergeleitet. Diese Einrichtung erkennt das Geheimnis TT und weiss somit, dass diese Meldung an den Empfänger MID weitergeleitet werden muss (Pfeil 109). Falls das Geheimnis TT der weiteren Vermittlungsstelle 3 unbekannt ist, muss die Registrierungsmeldung die Identifizierung MID des Empfängers enthalten. Das Geheimnis TT hat Eigenschaften, die der weiteren Vermittlungsstelle 3 eine Erkennung des Empfängers 4 ermöglicht. Zum Beispiel kann eine Tabelle in der Vermittlungsstelle 3 vorhanden sein, in welcher eine Abbildung zwischen jedem Geheimnis und den verschiedenen Empfängern 4 gespeichert ist. Als Variante können vordefinierte Serien von Geheimnissen mit bestimmten Empfängern verbunden sein.

Die Vermittlungsstelle 3 ersetzt dann die erste Alias-Identifizierung CID durch eine neu erzeugte, vom Empfänger MID abhängige, Alias-Identifizierung CMID (Pfeil 108). Diese Abbildung wird gespeichert, so dass in allen zukünftigen Meldungen die Alias-Identifizierung CID mit der gleichen CMID ersetzt wird. Die weitere Vermittlungsstelle 3 speichert auch eine Tabelle, in welcher angegeben wird, dass alle zukünftige Meldungen des anhand der Alias-Identifizierung CMID erkannten Senders 1 an den Empfänger CID gesendet werden müssen.

Die Registrierungsmeldung 109 mit der neuen Alias-Identifizierung CMID und dem Geheimnis TT wird dann an den Empfänger 4 weitergeleitet. Der Empfänger erkennt das Geheimnis TT, sofern es noch gültig ist, und weiss somit, dass die empfangene Registrierungsmeldung 109 aus dem mit der Benutzernummer C identifizierten Sender 1 kommt. Er kann somit die Abbildung zwischen seiner Benutzernummer C und der von der zweiten Vermittlungsstelle 3 verwendeten Alias-Identifizierung CMID erkennen und speichern. Da in allen zukünftigen Meldungen dieses Senders 1 für den selben Empfänger 4 die gleiche Alias-Identifizierung verwendet wird, kann er auch die Herkunft von zukünftigen anonymisierten Meldungen erkennen.

Falls die erste Alias-Identifizierung CID nicht vertraulich ist, ist es in einer Variante der Erfindung auch möglich, sie in der weitern Vermittlungsstelle 3 nicht zu ersetzen und die Meldungen 205 und 109 mit der ersten Alias-Identifizierung CID an den Empfänger 4 weiterzuleiten. In dieser Variante wird die erste Alias-Identifizierung erst beim Empfänger 4 durch die Identifizierung C ersetzt, die den Sender 1 für den Empfänger 4 hinreichend kennzeichnet.

## Patentansprüche

1. Verfahren, um eine Meldung durch ein Telekommunikationsnetz zu übertragen, in welchem identifizierende Merkmale (MSISDN) des Senders (1) der Meldung durch mindestens eine Alias-Identifizierung (CID; CMID) in mindestens einer Vermittlungsstelle (2;3) zwischen dem Sender (1) und dem Empfänger (4) ersetzt werden,
wobei die Abbildung zwischen den benannten identifizierenden Merkmalen (MSISDN) und der benannten Alias-Identifizierung (CID; CMID) für eine Zeitspanne, die verglichen mit dem durchschnittlichen Abstand zwischen nacheinander folgenden Meldungen lang ist, gewährleistet wird,
**dadurch gekennzeichnet, dass** dem benannten Empfänger (4) eine Abbildung zwischen der empfangenen Alias-Identifizierung (CID; CMID) und den Sender (1) hinreichend qualifizierenden Merkmalen (C) bekannt ist,
und dass die Abbildung zwischen der benannten empfangenen Alias-Identifizierung (CID; CMID) und den benannten qualifizierenden Merkmalen (C) des Senders (1) festgelegt wird, indem der Sender (1) eine Registrierungsmeldung (105) mit einem zwischen dem Empfänger (4) und dem Sender (1) vereinbarten Geheimnis (TT) an den Empfänger (4) sendet.

2. Verfahren gemäss Anspruch 1, in welchem das benannte Geheimnis (TT) über einen nicht anonymisierten Übertragungskanal (104) zwischen dem benannten Sender (1) und dem benannten Empfänger übertragen wird.

3. Verfahren gemäss einem der vorhergehenden Ansprüche, in welchem mindestens eine benannte Alias-Identifizierung (CID) gegenüber weiteren Vermittlungsstellen (3) anonym ist.

4. Verfahren gemäss einem der vorhergehenden Ansprüche, in welchem identifizierende Merkmale (MSISDN) des Senders (1) der Meldung durch eine erste Alias-Identifizierung (CID; CMID) in einer ersten Vermittlungsstelle (2;3) zwischen dem Sender (1) und dem Empfänger (4) ersetzt werden,
und in welchem die erste Alias-Identifizierung (CID) durch eine zweite Alias-Identifizierung (CMID) in einer zweiten Vermittlungsstelle (3) zwischen der ersten Vermittlungsstelle (2) und dem benannten Empfänger (4) ersetzt wird.

5. Verfahren gemäss Anspruch 4, in welchem in der benannten weiteren Vermittlungsstelle (3) Marketingstatistiken auf Basis der benannten anonymisierten Meldungen geführt werden.

6. Verfahren gemäss einem der Ansprüche 1 bis 5, in welchem das benannte Geheimnis (TT) von einer benannten Vermittlungsstelle (3) erzeugt wird.

7. Verfahren gemäss Anspruch 6, in welchem die benannte Registrierungsmeldung (105) von der benannten Vermittlungsstelle (3) auf Basis des benannten Geheimnisses (TT) an den Empfänger (4) geleitet wird.

8. Verfahren gemäss einem der Ansprüche 1 bis 7, in dem das benannte Geheimnis (TT) eine begrenzte Gültigkeitsdauer hat.

9. Verfahren gemäss einem der vorhergehenden Ansprüche, in welchem der benannte Sender (1) ein Mobilfunktelefon ist, und in welchem die benannten identifizierenden Merkmale (MSISDN) in einer Identifizierungskarte im benannten Mobilfunktelefon gespeichert sind.

10. Verfahren gemäss Anspruch 9, in welchem die benannte Meldung eine USSD-Meldung ist, die über einen USSD-Händler an die benannte Vermittlungsstelle (2) übermittelt wird.

11. Verfahren gemäss Anspruch 9, in welchem die benannte Meldung ein SMS ist, das über einen SMS-Händler an die benannte Vermittlungsstelle (2) übermittelt wird.

12. Verfahren gemäss Anspruch 9, in welchem die benannte Meldung eine signalisierende Meldung gemäss SS7 in einem ISDN-Netz ist.

13. Verfahren gemäss einem der Ansprüche 9 bis 12, in welchem mindestens eine benannte Vermittlungsstelle (2) vom Betreiber des Mobilfunknetzes, bei welchem das benannte Mobilfunktelefon des Senders (1) registriert ist, verwaltet wird.

14. Verfahren gemäss einem der vorhergehenden Ansprüche, in welchem der Standort des benannten Senders (1) beim Sender (1) oder in einer benannten Vermittlungsstelle (2; 3) ermittelt und in die benannte Meldung kopiert wird.

15. Verfahren gemäss einem der vorhergehenden Ansprüche, in welchem der benannte Empfänger (4, 5, 6) ein Dienst-, Produkt- oder Finanzanbieter ist.

16. Verfahren gemäss Anspruch 15, in welchem der benannte Empfänger (4) einen Dienst, ein Produkt oder eine finanzielle Dienstleistung über einen direkten Kanal zwischen Empfänger (4) und Sender (1) liefern kann.

17. Verfahren gemäss einem der Ansprüche 1 bis 16, in welchem:
das Geheimnis (TT) wird während einem benannten Registrierungsvorgang zwischen dem benannten Empfänger (4) und dem benannten bestimmten Sender (1) vereinbart,
der benannte Sender (1) sendet die Registrierungsmeldung (105), in welcher das benannte Geheimnis (TT) enthalten ist,
der benannte Empfänger (4) empfängt die benannte Registrierungsmeldung und verknüpft die benannte Alias-Identifizierung (CID, CMID) mit dem benannten bestimmten Sender (1) und speichert die benannte Verknüpfung.

18. Verfahren gemäss Anspruch 17, in welchem das benannte Geheimnis (TT) eine begrenzte Gültigkeitsdauer hat.

19. Computerprodukt, das in den internen Speicher eines digitalen Rechnersystems geladen werden kann, und in welchem Programme gespeichert sind, die das benannte Rechnersystem veranlassen, das Verfahren eines der vorhergehenden Ansprüche durchzuführen, wenn das benannte Programm ausgeführt wird.

20. System, das die Übertragung von Meldungen zwischen einer Vielzahl von Sendern (1) und mindestens einem Empfänger (4) erlaubt,
mit einer Vermittlungsstelle (2; 3), in welcher eine Abbildung zwischen identifizierenden Merkmalen (MSISDN) der benannten Sender (1) und Alias-Identifizierungen (CID, CMID) abgelegt sind,
**dadurch gekennzeichnet, dass**
der benannte Empfänger (4) ausgebildete ist, eine empfangene Alias-Identifizierung (CID, CMID) mit hinreichend qualifizierenden Merkmalen (C) der Sender (1) zu assoziieren und die Abbildung zwischen der benannten empfangenen Alias-Identifizierung (CID; CMID) und den benannten qualifizierenden Merkmalen (C) des Senders (1) durch den Empfang einer Registrierungsmeldung (105) von dem Sender (1) mit einem zwischen dem Empfänger (4) und dem Sender (1) vereinbarten Geheimnis (TT) festzulegen.

21. System gemäss Anspruch 20, mit einer ersten Vermittlungsstelle (2), in welcher eine Abbildung zwischen identifizierenden Merkmalen der benannten Sender (1) und einer anonymen Alias-Identifizierung (CID) abgelegt wird, und einer weiteren Vermittlungsstelle (3), in welcher eine Abbildung zwischen der benannten anonymen Alias-Identifizierung (CID) und der benannten vom benannten Empfänger (4) den Sendern (1) assoziierten Alias-Identifizierung (CMID) abgelegt wird.

22. System gemäss Anspruch 21, **dadurch gekennzeichnet, dass** die assoziierte Alias-Identifizierung (CMID), die der anonymen Alias-Identifizierung (CID) entspricht, vom benannten Empfänger (4) abhängig ist.

23. System gemäss Anspruch 21 oder 22, in welchem die benannten Sender (1) Mobilfunktelefone sind,
und in welchem die benannte erste Vermittlungsstelle (2) ein vom Betreiber des Mobilfunknetzes verwalteter Meldungshändler ist.

## Claims

1. Method for transmitting a message through a telecommunication network in which identifying features (MSISDN) of the sender (1) of the message are replaced in at least one switching centre (2, 3) between the sender (1) and the receiver (4) by at least one alias-identification (CID; CMID),
wherein a mapping between said identifying features (MSISDN) and said alias-identification (CID; CMID) is ensured for a time period, which is long compared to the average difference between successive messages,
**characterized in that** a mapping between said received alias-identification (CID, CMID) and features sufficiently qualifying the sender (C) is known to said receiver (4)
and that the mapping between said received alias-identification (CID, CMID) and features (C) sufficiently qualifying the sender (1) is determined by sending from the sender (1) to the receiver (4) a registration message (105) with a secret (TT) agreed between the receiver (4) and the sender (1).

2. Method according to claim 1, wherein said secrete (TT) is transmitted over a non-anonymized transmission channel (104) between said sender (1) and said receiver (4).

3. Method according to one of the previous claims, wherein at least one of said alias-identification (CID) is anonym with respect to further switching centres (3).

4. Method according to one of the previous claims, wherein the identifying features (MSISDN) of the sender (1) of the message is replaced by a first alias-identification (CID; CMID) in a first switching centre (2; 3) between the sender (1) and the receiver (4),
and wherein the first alias-identification (CID) is replaced in a second switching centre (3) between the first switching centre (2) and said receiver (4) by a second alias identification (CMID).

5. Method according to claim 4, wherein marketing statistics are done in said further switching centre (3) on the basis of said anonymized message.

6. Method according to one of claims 1 to 5, wherein said secret (TT) is created from said switching centre (3).

7. Method according to claim 6, wherein said registration message (105) is transmitted by said switching centre (3) to the receiver (4) on the basis of said secret (TT).

8. Method according to one of claims 1 to 7, wherein said secret (TT) has a limited validity period.

9. Method according to one of the previous claims, wherein said sender (1) is a mobile radio phone, and wherein said identifying features (MSISDN) are stored in a identification card in the mobile radio phone.

10. Method according to claim 9, whereby said message is an USSD-message which is transmitted to the switching centre (2) over a USSD trader.

11. Method according to claim 9, wherein said message is an SMS-message which is transmitted to the switching centre (2) via a SMS trader.

12. Method according to claim 9, wherein said message is a signalizing message according to SS7 in an ISDN-network.

13. Method according to one of the claims 9 to 12, wherein at least one said switching centre (2) is managed by the provider of the mobile phone network at which said mobile radio phone is registered.

14. Method according to one of the previous claims, wherein the location of said sender (1) is determined at the sender (1) or in said switching centre (2; 3) and is copied said message.

15. Method according to one of the previous claims, wherein said receiver (4, 5, 6) is a service provider, product provider or financial provider.

16. Method according to claim 15, wherein said receiver (4) can deliver a service, a product or a financial service over a direct channel between said receiver (4) and sender (1).

17. Method according to one of claims 1 to 16, wherein:
the secret (TT) is determined during a registration process between said receiver (4) and said sender (1),
said sender (1) sends the registration message (105) in which said secret (TT) is comprised,
said receiver (4) receives said registration message and links said Alias-identification (CID; CMID) with said sender (1) and stores said link.

18. Method according to claim 17, wherein said secret (TT) has a limited validity.

19. Computer product which can be loaded in the internal memory of a digital computer and in which programs are stored which cause the computer to carry out the method of one of the previous claims, when said program is carried out.

20. System for transmitting a message between a plurality of senders (1) and at least one receiver (4),
with a switching centre (2; 3) in which a mapping between identifying features (MSISDN) of said sender (1) and alias-identification (CID; CMID) is stored,
**characterized in that**
said receiver (4) is configured to associate a received alias-identification (CID, CMID) with features sufficiently qualifying the sender (C) and to determine a mapping between said received alias-identification (CID, CMID) and features (C) sufficiently qualifying the sender (1) by receiving from the sender (1) a registration message (105) with a secret (TT) agreed between the receiver (4) and the sender (1).

21. System according to claim 20, with a first switching centre (2) in which a mapping between identifying features of said sender (1) and an anonymous alias-identification (CID) is stored, and a further switching centre (3) in which a mapping between said anonymous alias-identification (CID) and said alias-identification (CMID) associated by said receiver (4) with said sender (1) is stored.

22. System according to claim 21, **characterized in that** said associated alias-identification (CMID) corresponding to said anonymous alias-identification is dependent from said receiver (4).

23. System according to claim 21 or 22, wherein said sender (1) are mobile radio phones,
and wherein said first switching centre (2) is a message trader managed by said mobile radio network.

## Revendications

1. Procédé pour la transmission d'un message par le biais d'un réseau de télécommunication, dans lequel des caractéristiques d'identification (MSISDN) de l'émetteur (1) du message sont remplacées dans au moins un centre de commutation (2; 3) entre l'émetteur (1) et le récepteur (4) par au moins une identification alias (CID; CMID),
le mappage entre lesdites caractéristiques d'identification (MSISDN) et ladite identification alias (CID; CMID) étant assuré pour un laps de temps qui est long en comparaison de l'intervalle moyen entre des messages successifs,
**caractérisé en ce que** ledit récepteur (4) connaît un mappage entre l'identification alias reçue (CID; CMID) et des caractéristiques (C) qualifiant suffisamment l'émetteur (1),
et **en ce que** le mappage entre ladite identification alias (CID; CMID) reçue et lesdites caractéristiques (C) qualifiantes de l'émetteur (1) sont définies au moyen de l'émetteur (1) envoyant au récepteur (4) un message d'enregistrement (105) avec un secret (TT) convenu entre le récepteur (4) et l'émetteur (4).

2. Procédé selon la revendication 1, dans lequel ledit secret (TT) est transmis au travers d'un canal de transmission (104) non anonymisé entre ledit émetteur (1) et ledit récepteur.

3. Procédé selon l'une des revendications précédentes, dans lequel au moins une dite identifications alias (CID) est anonyme par rapport à des centres de commutation supplémentaires (3).

4. Procédé selon l'une des revendications précédentes, dans lequel les caractéristiques d'identification (MSISDN) de l'émetteur (1) du message sont remplacées par une première identification alias (CID; CMID) dans un premier centre de commutation (2; 3) entre l'émetteur (1) et le récepteur (4),
et dans lequel la première identification alias (CID) est remplacée par une deuxième identification alias (CMID) dans un deuxième centre de commutation (3) entre le premier centre de commutation (2) et ledit récepteur (4).

5. Procédé selon la revendication 4, dans laquelle lesdits centres de commutation supplémentaires (3) effectuent des statistiques marketing sur la base desdits messages anonymisés.

6. Procédé selon l'une des revendications 1 à 5, dans lequel ledit secret (TT) est généré par l'un desdits centres de commutation (3).

7. Procédé selon la revendication 6, dans lequel ledit message d'enregistrement (105) est transmis par ledit centre de commutation (3) au récepteur (4) sur la base dudit secret (TT).

8. Procédé selon l'une des revendications 1 à 7, dans lequel ledit secret (TT) possède une durée de validité limitée.

9. Procédé selon l'une des revendications précédentes, dans lequel ledit émetteur (1) est un téléphone mobile et dans lequel lesdites caractéristiques d'identification (MSISDN) sont stockées dans une carte d'identification dans ledit téléphone mobile.

10. Procédé selon la revendication 9, dans lequel ledit message est un message USSD qui est transmis audit centre de commutation (2) au travers d'un gestionnaire USSD.

11. Procédé selon la revendication 9, dans lequel ledit message est un SMS qui est transmis audit centre de commutation (2) au travers d'un gestionnaire SMS.

12. Procédé selon la revendication 9, dans lequel ledit message est un message de signalisation selon SS7 dans un réseau ISDN.

13. Procédé selon l'une des revendications 9 à 12, dans lequel au moins un dit centre de commutation (2) est géré par l'opérateur du réseau mobile dans lequel ledit téléphone mobile de l'émetteur (1) est enregistré.

14. Procédé selon l'une des revendications précédentes, dans lequel l'emplacement dudit émetteur (1) est déterminé auprès de l'émetteur (1) ou dans un dit centre de commutation (2; 3) et copié dans ledit message.

15. Procédé selon l'une des revendications précédentes, dans lequel ledit récepteur (4, 5, 6) est un prestataire de services, un fournisseur de produits ou un prestataire de services financiers.

16. Procédé selon la revendication 15, dans lequel ledit récepteur (4) peut fournir un service, un produit ou un service financier par le biais d'un canal direct entre le récepteur (4) et l'émetteur (1).

17. Procédé selon l'une des revendications 1 à 16, dans lequel:
le secret (TT) est convenu pendant un dit processus d'enregistrement entre ledit récepteur (4) et ledit émetteur (1) particulier,
ledit émetteur (1) envoie le message d'enregistrement (105) contenant ledit secret (TT),
ledit récepteur (4) reçoit ledit message d'enregistrement et relie ladite identification alias (CID, CMID) audit émetteur (1) particulier et stocke ledit lien.

18. Procédé selon la revendication 17, dans lequel ledit secret (TT) possède une durée de validité limitée.

19. Produit informatique qui peut être chargé dans la mémoire interne d'un système de calcul numérique et dans lequel des programmes sont stockés qui causent ledit système informatique à effectuer le procédé de l'une des revendications précédentes lorsque ledit program est exécuté.

20. Système permettant la transmission de messages entre une pluralité d'émetteurs (1) et au moins un récepteur (4),
avec un centre de commutation (2; 3), dans lequel un mappage entre des caractéristiques d'identification (MSISDN) dudit émetteur (1) et des identifications alias (CID, CMID) est stocké,
**caractérisé en ce que**
ledit récepteur (4) est configuré pour associer une identification alias (CID, CMID) reçue avec des caractéristiques (C) qualifiant suffisamment l'émetteur (1) et pour définir le mappage entre ladite identification alias reçue (CID; CMID) et lesdites caractéristiques (C) qualifiantes de l'émetteur (1) en recevant un message d'enregistrement (105) de l'émetteur (1) avec un secret (TT) convenu entre le récepteur (4) et l'émetteur (1).

21. Système selon la revendication 20, avec un premier centre de commutation (2) dans lequel un mappage entre des caractéristiques d'identification dudit émetteur (1) et une identification alias anonyme (CID) est stocké, et avec un centre de commutation (3) supplémentaire dans lequel un mappage entre ladite identification alias anonyme (CID) et ladite identification alias (CMID) associée par ledit récepteur (4) auxdits émetteurs (1) est stocké.

22. Système selon la revendication 21, **caractérisé en ce que** l'identification alias associée (CMID) correspondant à l'identification alias anonyme (CID) dépend dudit récepteur (4).

23. Système selon la revendication 21 ou 22, dans lequel lesdits émetteurs (1) sont des téléphones mobiles,
et dans lequel ledit premier centre de commutation (2) est un gestionnaire de messages géré par l'opérateur du réseau mobile.
